# DEMANDE DE BREVET EUROPEEN

(11) **EP 1 881 361 A1**
(43) Date de publication de la demande: **23.01.2008**
(21) Numéro de dépôt: 06015284.0
(22) Date de dépôt: 21.07.2006
(51) Int. Cl.: G02F 1/1333, G02F 1/1341, G02F 1/1343

(54) **Cellule d'affichage électro-optique présentant un aspect optique uniforme ainsi que procédé de fabrication d'une telle cellule**

(71) Demandeur: The Swatch Group Research and Development Ltd., 2074 Marin (CH)
(72) Inventeur: Grupp, Joachim, 2073 Enges (CH); Rey-Mermet, Gilles, 2502 Bienne (CH)
(74) Mandataire: Ravenel, Thierry Gérard Louis

(57) **Abrégé**

L'invention concerne une cellule d'affichage électro-optique comprenant:
- au moins un substrat avant (14) disposé du côté de l'observateur;
- au moins un substrat arrière (16) disposé parallèlement à et à distance du substrat avant (14);
- les faces en regard des substrats avant (14) et arrière (16) comprenant respectivement au moins une électrode (A,B,C,D,E,F,G;n) chaque électrode comprenant au moins un segment (1a-1g;2a-2g;4a), et au moins une contre-électrode (H,I,J;N) correspondante qui définissent ensemble une zone active (22) de la cellule (12), dans laquelle est affiché au moins un motif (1,2,4) formé d'au moins un des segments (1a-1g;2a-2g;4a),
cette cellule d'affichage étant caractérisée en ce qu'elle comprend au moins un canal de remplissage (6) qui suit sensiblement le contour de la au moins une électrode et qui permet de confiner un liquide optiquement actif (LC).
L'invention concerne également un procédé de fabrication d'une telle cellule.

## Description

La présente invention concerne un dispositif d'affichage électro-optique présentant un aspect optique uniforme. Plus précisément, l'invention concerne un dispositif d'affichage électro-optique ne présentant pas de défauts d'affichage.

Dans sa forme de réalisation la plus simple, une cellule d'affichage électro-optique telle qu'une cellule d'affichage à cristal liquide comprend un substrat supérieur ou substrat avant disposé du côté de l'observateur et un substrat inférieur ou substrat arrière disposé parallèlement au substrat avant et à distance de celui-ci. Ces deux substrats avant et arrière sont réunis entre eux par un cadre de scellement qui suit le contour desdits substrats et qui délimite une enceinte étanche pour le confinement du cristal liquide. Les deux substrats portent respectivement sur leurs faces en regard un jeu d'électrodes et un jeu de contre-électrodes. Par application d'une tension de commande appropriée entre une électrode et une contre-électrode sélectionnées, on modifie les propriétés optiques du cristal liquide au point de croisement de l'électrode et de la contre-électrode considérées.

Les cellules d'affichage à cristal liquide présentent donc des zones actives dans lesquelles leurs propriétés optiques peuvent être modifiées par applications de tensions de commande entre des électrodes sélectionnées et des zones non-actives car dépourvues d'électrodes et qui ne participent donc pas à l'affichage d'informations. Toutefois, ces zones non-actives qui entourent les zones actives où une information est affichée contribuent à l'aspect visuel des cellules à cristal liquide. Par conséquent, des modifications dans l'aspect visuel de ces zones inactives dues à une mauvaise orientation des molécules de cristal liquide peuvent avoir des conséquences fâcheuses sur l'apparence de la cellule et ne peuvent malheureusement pas être corrigées en raison de l'absence d'électrodes dans ces zones.

Des problèmes de dégradation de l'aspect visuel d'une cellule à cristal liquide du genre mentionnés ci-dessus peuvent par exemple apparaître dans des cellules à cristal liquide nématique twisté mieux connu sous sa dénomination anglo-saxonne "Twist Nematic liquid crystal" ou cristal liquide "TN". Ces problèmes peuvent être notamment dus à un mauvais alignement entre les deux substrats de la cellule ou encore à une mauvaise répartition des espaceurs entre ces mêmes substrats et ils ont pour effet d'induire un mauvais alignement des molécules de cristal liquide. Mal alignées, les molécules de cristal liquide peuvent alors apparaître sombres sur un fond clair ou inversement, et induire ainsi des points d'affichage parasites dans la zone visible de la cellule.

Ce problème est encore plus sensible dans le cas des cellules d'affichage à cristal liquide bistable qui, comme on le sait, présente deux états optiquement stables et qui peut passer d'un état optique à l'autre et inversement par application d'un champ électrique de commande. Ces états optiques sont normalement stables pendant des années. Toutefois, sous l'effet de contraintes par exemple mécaniques, thermiques ou encore électromagnétiques, les molécules de cristal liquide peuvent commuter de manière aléatoire et incontrôlable. L'intervalle entre deux rafraîchissements successifs est de 10 minutes pour des afficheurs électrophorétiques et jusqu'à plusieurs mois pour les cellules d'affichage à cristaux liquides bistables. L'information n'est cependant rafraîchie qu'aux endroits où les électrodes sont présentes. Par conséquent, des modifications dans l'aspect des molécules de cristal liquide bistable dans les zones inactives de la cellule concourent à la détérioration de l'aspect visuel de ladite cellule et ne peuvent être corrigées en raison de l'absence d'électrodes dans ces zones.

Une première solution à ce problème consisterait à recouvrir d'électrodes toute la surface de la cellule d'affichage, de sorte que le cristal liquide pourrait être adressé en tout point. Une telle solution serait néanmoins coûteuse, notamment en raison de la complexité du design des électrodes.

La présente invention a pour but de remédier aux inconvénients susmentionnés ainsi qu'à d'autres encore en procurant un dispositif d'affichage électro-optique, notamment à cristal liquide, présentant un aspect optique uniforme indépendamment de tout défaut d'orientation des molécules optiquement actives.

A cet effet, la présente invention concerne une cellule d'affichage électro-optique renfermant un liquide optiquement actif et comprenant:
- au moins un substrat avant disposé du côté de l'observateur;
- au moins un substrat arrière disposé parallèlement et à distance du substrat avant;
- les faces en regard des substrats avant et arrière comprenant respectivement au moins une électrode et une contre-électrode correspondante qui définissent ensemble une zone active d'affichage de la cellule,
cette cellule d'affichage étant caractérisée en ce qu'elle comprend au moins un canal de remplissage qui suit sensiblement le contour de la au moins une électrode et qui permet de confiner le liquide optiquement actif au voisinage de cette électrode.

Grâce à ces caractéristiques, la présente invention procure une cellule d'affichage électro-optique dans laquelle le liquide optiquement actif tel qu'un cristal liquide est confiné aux endroits de la cellule où se trouvent les électrodes. Par conséquent, si un défaut d'orientation des molécules de cristal liquide apparaît, ce défaut peut être corrigé en appliquant une tension appropriée entre les électrodes concernées. La tension de rafraîchissement peut être appliquée de manière ponctuelle, à la demande de l'utilisateur, ou de manière périodique, en étant contrôlée par le dispositif de commande de la cellule.

Selon la variante de base de l'invention, l'espace laissé vacant par le canal de remplissage entre les deux substrats de la cellule est laissé vide. On obtient ainsi une cellule d'affichage électro-optique dont la couleur des informations affichées dans la zone active est déterminée par les propriétés optiques du liquide optiquement actif, tandis que la couleur de la zone non-active de la cellule qui est dépourvue d'électrode est déterminée par les propriétés optiques des substrats.

Selon une seconde variante de réalisation de l'invention, l'espace laissé vacant entre les deux substrats par le canal de remplissage est garni avec une matière solide. Préférentiellement, cette matière solide présente des propriétés optiques semblables à celle du liquide optiquement actif dans l'un de ses états stables. En d'autres termes, on remplace le liquide optiquement actif dans les zones non commutables de la cellule d'affichage par une matière qui présente le même aspect optique que celui du liquide optiquement actif dans l'un de ses états stables et qui est insensible aux contraintes mécaniques, thermiques, électromagnétiques ou autres.

Selon un premier mode de réalisation, le canal de remplissage est formé par deux cloisons qui s'étendent parallèlement et à distance l'une de l'autre pour constituer le volume de remplissage du liquide optiquement actif, et l'espace laissé vacant entre les deux substrats par le canal de remplissage est garni avec une matière solide.

Selon un second mode de réalisation, l'espace entre les deux substrats est garni avec une matière solide dans laquelle est structuré le canal de remplissage.

Selon une troisième variante de réalisation, l'espace laissé vacant entre les deux substrats par le canal de remplissage est garni avec une matière liquide. Dans ce cas, il faut prévoir un cadre de scellement qui suit sensiblement le pourtour extérieur de la cellule et qui sert à confiner la matière de garnissage liquide.

D'autres caractéristiques et avantages de la présente invention ressortiront plus clairement de la description détaillée qui suit d'un mode de réalisation de la cellule d'affichage selon l'invention, cet exemple étant donné à titre purement illustratif et non limitatif seulement, en liaison avec le dessin annexé sur lequel:
- la figure 1 est une représentation schématique du type de caractères alphabétiques, numériques ou autres qui peut être affiché au moyen de la cellule d'affichage selon l'invention;
- la figure 2 est une vue de dessus d'un canal pour le remplissage du cristal liquide qui épouse sensiblement le contour des caractères à afficher;
- la figure 3 est le résultat de la superposition des caractères à afficher de la figure 1 et du canal de remplissage représenté à la figure 2;
- la figure 4 représente le design des électrodes qui permettent de commander l'affichage des caractères numériques représentés à la figure 1;
- la figure 5 représente le design des contre-électrodes qui coopèrent avec les électrodes de la figure 4 pour l'affichage des caractères numériques représentés à la figure 1;
- la figure 6 est une vue partielle en coupe d'une cellule d'affichage à cristal liquide selon l'invention, l'espace laissé vacant entre les deux substrats par le canal de remplissage étant laissé vide;
- la figure 7 est une vue partielle en coupe d'une cellule d'affichage à cristal liquide selon l'invention, l'espace laissé vacant entre les deux substrats par le canal de remplissage étant rempli par un matériau susceptible de s'écouler entre les deux dits substrats et qui est solidifié dans une étape ultérieure;
- la figure 8 est une vue analogue à celle de la figure 7, un cadre de scellement étant formé sur le pourtour de la cellule pour le confinement d'un matériau de remplissage liquide qui est solidifié dans une étape de traitement ultérieure;
- la figure 9 est une vue analogue à celle de la figure 8, la matière restant liquide même après achèvement de la cellule à cristal liquide selon l'invention;
- la figure 10 est une vue partielle en coupe d'une cellule d'affichage à cristal liquide selon l'invention, une couche de matériau solide dans laquelle sont structurés des canaux de remplissage étant déposée sur toute la surface de l'un des substrats, et
- la figure 11 est une vue de dessus de deux canaux de remplissage indépendants l'un de l'autre et qui communiquent chacun avec un trou de remplissage respectif pour leur remplissage avec des cristaux liquides aux propriétés électro-optiques différentes.

La présente invention procède de l'idée générale inventive qui consiste à procurer une cellule d'affichage à liquide électro-optique tel que du cristal liquide exempte de tout défaut d'affichage. A cet effet, on confine le liquide optiquement actif au voisinage des seules électrodes, de sorte que si un défaut d'affichage apparaît dans le volume du liquide, celui-ci peut être supprimé soit par une opération de rafraîchissement ponctuelle commandée par l'utilisateur lui-même, soit par des opérations de rafraîchissement périodiques contrôlées par le dispositif de commande de la cellule d'affichage. En confinant le liquide optiquement actif uniquement au voisinage des électrodes, on évite tout risque d'apparition de défauts d'affichage permanents dans des zones du liquide qui ne sont pas adressées par les électrodes. De plus, on peut garnir l'espace laissé vacant entre les substrats par les canaux de remplissage au moyen d'un matériau solide ou liquide qui présente les mêmes propriétés optiques que le liquide optiquement actif dans l'un de ses états stables, de sorte que l'aspect visuel de la cellule d'affichage est parfaitement homogène sur toute sa surface.

La présente invention va être décrite en liaison avec une cellule d'affichage à cristal liquide. Il va de soi que cet exemple est donné à titre purement illustratif et non limitatif seulement et que la présente invention s'applique à tout type de cellule d'affichage à liquide optiquement actif tel qu'un liquide électrophorétique.

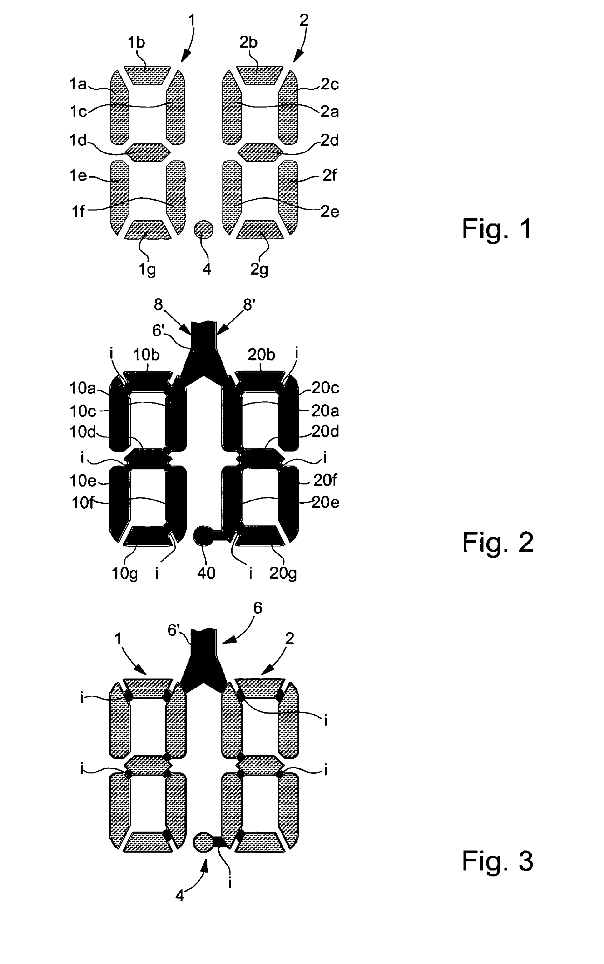

La figure 1 est une représentation schématique du type de caractères alphabétiques ou numériques que l'on peut afficher au moyen de la cellule d'affichage selon l'invention. Comme illustré à la figure 1, il peut s'agir de deux caractères numériques 1 et 2 séparés par une forme circulaire ou point 4 et qui sont chacun classiquement composés de sept segments, respectivement 1 a - 1g et 2a - 2g. Avec un tel agencement, il est possible d'afficher tous les chiffres de "0" à "9". Il va de soi que cet exemple est donné à titre purement illustratif seulement et qu'il peut être envisagé tout type de motif alphabétique, figuratif ou autre.

La figure 2 est une vue de dessus d'un canal de remplissage 6 selon l'invention. Comme on peut le voir au dessin, le canal de remplissage 6 se compose pour l'essentiel de deux parois 8 et 8' qui s'étendent parallèlement et à distance l'une de l'autre et qui épousent sensiblement le contour des caractères 1 et 2 à afficher représentés à la figure 1. Plus précisément, le canal de remplissage se compose d'un conduit d'amenée unique 6' par lequel on vient alimenter en cristal liquide une pluralité de compartiments 10a - 10g et 20a - 20g qui se superposent aux segments 1a -1g et 2a - 2g des deux caractères numériques 1 et 2 que l'on souhaite afficher. Un dernier compartiment 40 se superpose à la forme circulaire 4 à afficher.

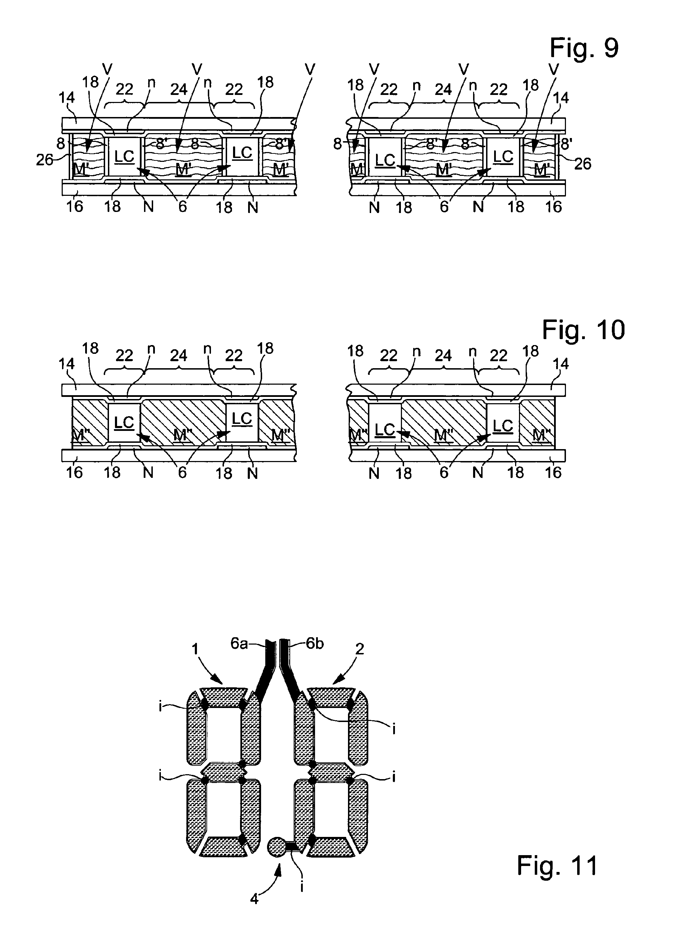

Comme on peut le constater à l'examen de la figure 2, l'ensemble des compartiments 10a - 10g, 20a - 20g et 40 communiquent les uns avec les autres via des chenaux i, grâce à quoi on peut prévoir un conduit d'amenée 6' unique pour le remplissage de ces dits conduits avec du cristal liquide. Il va toutefois de soi que l'on pourrait, par exemple, envisager de remplir les compartiments 10a - 10g d'une part, et les compartiments 20a - 20g et 40 d'autre part via deux conduits d'amenée distincts. Dans ce cas, il ne serait pas nécessaire que le premier groupe de compartiments 10a - 10g communique avec le second groupe de compartiments 20a - 20g, 40 (voir figure 11). Ceci permet de varier les aspects visuels de la cellule d'affichage en changeant la nature des cristaux liquides employés.

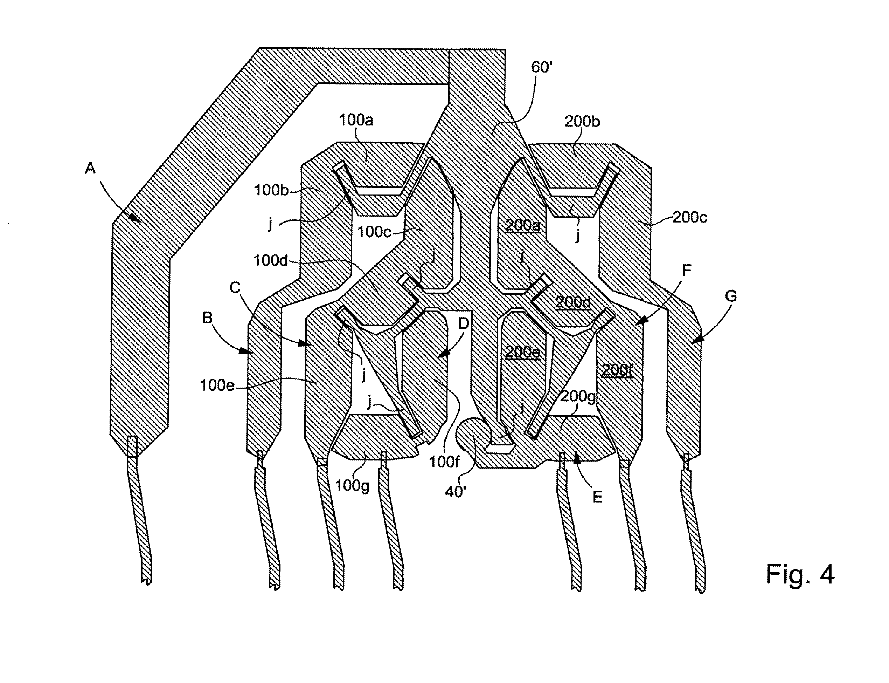

La figure 3 est le résultat de la superposition des caractères 1 et 2 à afficher représentés à la figure 1 et du canal de remplissage 6 illustré à la figure 2. Comme on le comprendra aisément, le conduit d'amenée 6' et les chenaux i sont remplis de cristal liquide mais ne contribuent pas à l'affichage des caractères 1, 2 et 4. Il faut par conséquent prévoir une électrode spécifique pour le contrôle de ces volumes de cristal liquide comme il va maintenant être expliqué en détail en liaison avec les figures 4 et suivantes.

A la figure 4, on a représenté le design des électrodes qui permettent de commander l'affichage des segments des caractères numériques 1, 2 et de la forme circulaire 4 et de contrôler les volumes de cristal liquide qui se trouvent dans les chenaux i ainsi que dans le conduit d'amenée 6'.

Plus précisément, le design des électrodes représenté à la figure 4 comprend une première électrode A qui est faite d'une seule pièce et qui comprend une première partie 60' qui recouvre le conduit d'amenée 6' ainsi qu'une pluralité de ramifications i qui recouvrent les chenaux i qui servent à mettre les différents compartiments en communication les uns avec les autres et qui sont, pour cette raison, remplis de cristal liquide, mais qui ne contribuent pas à l'affichage d'une information.

Une seconde électrode B comprend deux segments 100a et 100b qui recouvrent les compartiments 10a et 10b. Grâce à cet agencement, il est donc possible, au moyen d'une seule électrode, de contrôler l'affichage de deux segments.

Une troisième électrode C comprend trois segments 100c, 100d et 100e qui recouvrent respectivement les compartiments 10c, 10d et 10e. On peut ainsi contrôler trois segments au moyen d'une seule électrode.

Pour pouvoir contrôler l'affichage des caractères numériques 1, 2 et de la forme circulaire 4, il est encore prévu:
- une électrode D qui comprend deux segments 100f et 100g qui recouvrent les compartiments 10f et 10g;
- une électrode E qui comprend trois segments 200g, 200e et 40' qui recouvrent les compartiments 20g, 20e et 40'.
- une électrode F qui comprend trois segments 200a, 200d et 200f recouvrant les compartiments 20a, 20d et 20f;
- une électrode G qui comprend deux segments 200b et 200c recouvrant les compartiments 20b et 20c.

On remarquera à l'examen de la figure 4 la manière dont les ramifications i de l'électrode A qui permettent de contrôler le cristal liquide renfermé dans les chenaux de mise en communication i viennent s'imbriquer entre les segments des différentes électrodes de commande de l'affichage A - G.

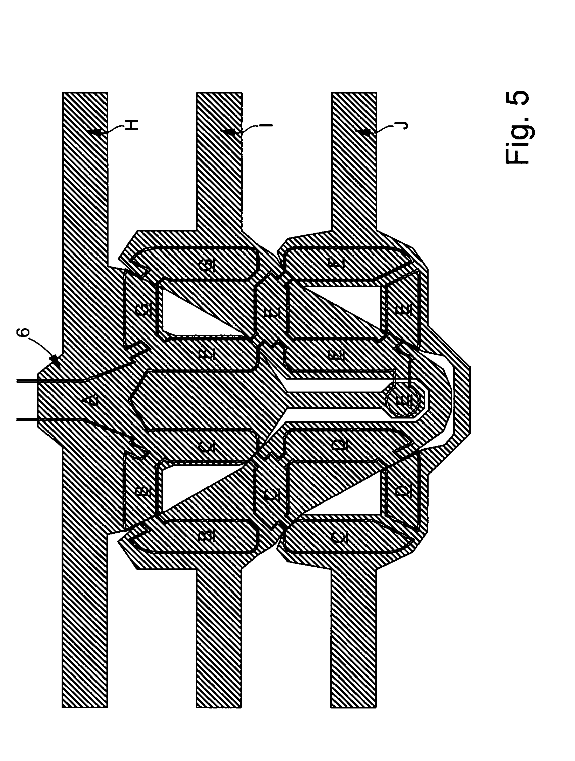

Le design des contre-électrodes est représenté à la figure 5. On a également représenté sur cette figure le contour du canal de remplissage 6. Comme on peut le voir sur le dessin, les sept électrodes A - G sont commandées par seulement trois contre-électrodes H, I et J, ce qui permet un taux de multiplexage très avantageux et donc une simplification de l'électronique de commande de la cellule selon l'invention.

Plus précisément, la contre-électrode H coopère avec certains segments des électrodes B, C, F et G. La contre-électrode l coopère avec certains des segments des électrodes B, C, D, E, F et G et la contre-électrode J coopère avec certains des segments des électrodes D, E et F. Pour faciliter la compréhension du dessin, on a indiqué par leurs références alphabétiques correspondantes les électrodes qui commandent les différents compartiments du canal de remplissage 6.

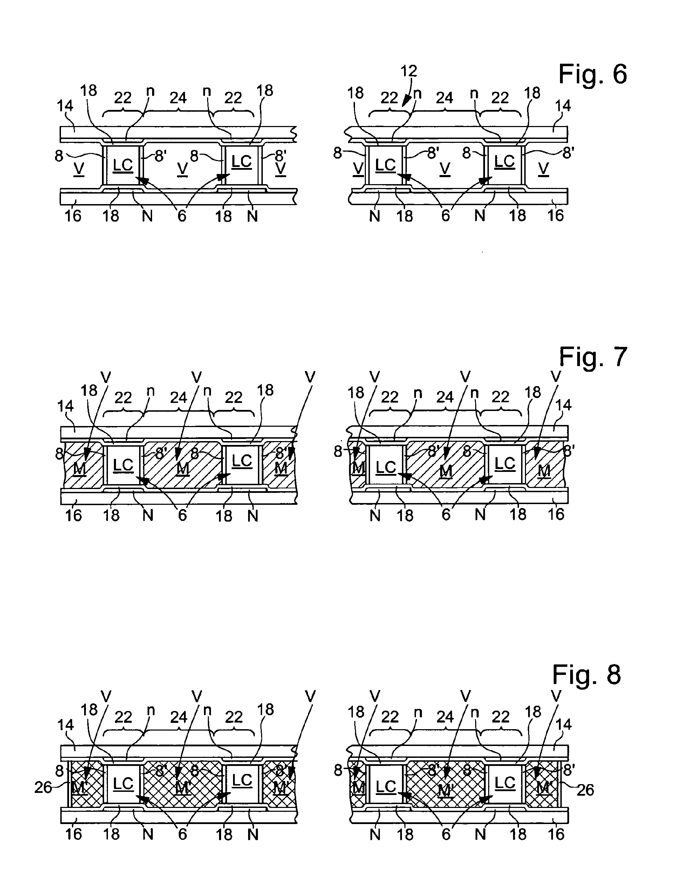

On s'intéresse maintenant en liaison avec les figures 6 et suivantes aux différents modes de réalisation possibles d'une cellule à cristal liquide selon l'invention. Désignée dans son ensemble par la référence numérique générale 12, la cellule d'affichage à cristal liquide selon l'invention comprend deux substrats avant 14 et arrière 16 sur les faces en regard desquels sont structurées au moins une électrode n et une contre-électrode N correspondante. Selon le type de cristal liquide utilisé, l'électrode n et la contre-électrode N sont recouvertes d'une couche d'accrochage ou d'une couche diélectrique 18. Comme on peut le constater à l'examen de la figure, la couche d'accrochage s'étend au-delà des électrodes et recouvre les zones qui en sont dépourvues, ceci afin d'éviter de devoir structurer cette couche. Bien entendu, selon une variante, il serait également possible de structurer ladite couche d'accrochage de façon qu'elle ne recouvre que les électrodes. Les parois 8, 8' du canal de remplissage 6 s'étendent verticalement à distance l'une de l'autre entre les deux substrats 14, 16 en suivant sensiblement le profil de l'électrode n.

Selon une variante d'exécution simplifiée de l'invention (voir figure 6), l'espace V laissé vacant entre les deux substrats 14 et 16 par les parois 8, 8' du canal de remplissage 6 est laissé vide. On obtient ainsi une cellule à cristal liquide dont la couleur des informations affichées dans la zone active 22 de la cellule est déterminée par les propriétés optiques du cristal liquide ou éventuellement de filtres, tandis que la couleur de la zone non-active 24 de la cellule qui est dépourvue d'électrode est déterminée par les propriétés optiques des substrats 14, 16.

On notera également que les deux substrats 14, 16 sont maintenus ensemble par le biais des parois 8, 8' du canal de remplissage, l'espacement entre ces deux substrats étant classiquement assuré par des espaceurs tels que des billes de faible diamètre. Ces parois 8, 8' peuvent par exemple être réalisées par sérigraphie au moyen d'une matière habituellement utilisée pour réaliser les cadres de scellement. Elles peuvent également être réalisées par polymérisation d'une résine photosensible. La largeur d'une de ces cloisons est typiquement de l'ordre de 20 µm.

Selon une seconde variante d'exécution de l'invention, l'espace V laissé vacant entre les deux substrats 14, 16 par le canal de remplissage 6 est garni avec une matière solide M.

Selon un premier mode de réalisation représenté à la figure 7, le matériau M est une matière qui est susceptible de s'écouler dans l'espace V laissé vacant entre les deux substrats 14, 16 par le canal de remplissage 6. Une fois l'espace V rempli, on solidifie le matériau M. Il peut s'agir, par exemple, d'une colle polymérisable par exposition aux UV. Préférentiellement mais non limitativement, le matériau M présentera des propriétés optiques semblables à celles du cristal liquide LC confiné dans le canal 6 lorsqu'il est dans un de ses deux états commuté ou non commuté. De la sorte, on obtiendra un affichage parfaitement homogène et exempt de tout défaut. On notera également que le matériau de remplissage M solide concourt à la tenue mécanique de la cellule et évite toute fuite de cristal liquide ou sa pollution par diffusion gazeuse.

Selon un second mode de réalisation illustré à la figure 8, le matériau M' est un matériau liquide qui est capable de se solidifier dans une étape de traitement ultérieure. Dans ce cas, il faut prévoir un cadre de scellement 26 qui s'étend sensiblement sur le pourtour des deux substrats 14, 16 et qui définit un volume de confinement V' pour la matériau de remplissage M' liquide. Il faut bien entendu prévoir dans le cadre de scellement 26 un trou (non représenté) pour le remplissage du matériau liquide M', trou qui, après remplissage, sera hermétiquement scellé. A ce stade, le matériau M' est solidifié, par exemple par polymérisation et plus spécifiquement par photopolymérisation. Comme ci-dessus, le matériau de remplissage M' pourra présenter des propriétés optiques similaires à celles du cristal liquide LC lorsque celui-ci est dans un de ses états commuté ou non commuté de façon à procurer un affichage homogène.

A la figure 9, le matériau de remplissage M' reste liquide tout au long de la durée de vie de la cellule.

Selon un troisième mode de réalisation représenté à la figure 10, on dépose, par exemple par sérigraphie ou par photolithographie, une couche de matériau solide M" sur toute la surface de l'un des substrats, en structurant dans cette couche les canaux de remplissage 6 du cristal liquide.

Il va de soi que la présente invention n'est pas limitée aux modes de réalisation qui viennent d'être décrits et que diverses modifications et variantes simples peuvent être envisagées par l'homme du métier sans sortir du cadre de l'invention tel que défini par les revendications annexées. En particulier, il peut être envisagé que tout ou partie des canaux de remplissage soient indépendants les uns des autres et communiquent chacun avec un trou de remplissage respectif pour le remplissage de ces canaux avec des cristaux liquides différents (voir figure 11).

## Revendications

1. Cellule d'affichage électro-optique comprenant:
- au moins un substrat avant (14) disposé du côté de l'observateur;
- au moins un substrat arrière (16) disposé parallèlement à et à distance du substrat avant (14);
- les faces en regard des substrats avant (14) et arrière (16) comprenant respectivement au moins une électrode (A, B, C, D, E , F, G; n) et au moins une contre-électrode (H, l, J; N) correspondante qui définissent ensemble une zone active (22) de la cellule (12), dans laquelle est affiché au moins un motif (1, 2, 4) formé d'au moins un segment (1a - 1g; 2a - 2g; 4a),
cette cellule d'affichage étant **caractérisée en ce qu'**elle comprend au moins un canal de remplissage (6) qui suit sensiblement le contour de la au moins une électrode et qui permet de confiner un liquide optiquement actif (LC).

2. Cellule d'affichage électro-optique selon la revendication 1, **caractérisée en ce que** le canal de remplissage (6) comprend deux parois latérales (8, 8') qui s'étendent parallèlement à et à distance l'une de l'autre et qui épousent sensiblement le contour du motif (1, 2, 4) à afficher.

3. Cellule d'affichage électro-optique selon la revendication 2, **caractérisée en ce que** le canal de remplissage comprend au moins un conduit d'amenée (6') par lequel on vient alimenter en liquide optiquement actif (LC) une pluralité de compartiments (10a-10g; 20a - 20g; 40) qui se superposent aux segments (1a-1g; 2a - 2g; 4a) du motif (1, 2, 4) à afficher.

4. Cellule d'affichage électro-optique selon la revendication 3, **caractérisée en ce que** les compartiments (10a - 10g; 20a - 20g; 40) communiquent les uns avec les autres via des chenaux (i).

5. Cellule d'affichage électro-optique selon la revendication 4, **caractérisée en ce que** les parties (6'; i) du canal de remplissage (6) qui sont remplies de liquide optiquement actif (LC) mais qui ne contribuent pas à l'affichage du motif (1, 2, 4) sont contrôlées par au moins une électrode spécifique (A).

6. Cellule d'affichage électro-optique selon l'une quelconque des revendications 1 à 5, **caractérisée en ce que** les électrodes et les contre-électrodes sont multiplexées.

7. Cellule d'affichage électro-optique selon l'une quelconque des revendications 1 à 6, **caractérisée en ce que** l'espace (V) laissé vacant entre les deux substrats (14, 16) et les parois (8, 8') du canal de remplissage (6) est laissé vide.

8. Cellule d'affichage électro-optique selon l'une quelconque des revendications 1 à 6, **caractérisée en ce que** l'espace (V) laissé vacant entre les deux substrats (14, 16) et les parois (8, 8') du canal de remplissage (6) est garni avec un matériau de remplissage (M') liquide.

9. Cellule d'affichage électro-optique selon la revendication 8, **caractérisée en ce qu'**elle comprend un cadre de scellement (26) qui s'étend sensiblement sur le pourtour extérieur de la cellule et qui définit un volume de confinement (V') pour le matériau de remplissage (M') liquide.

10. Cellule d'affichage électro-optique selon l'une quelconque des revendications 1 à 6, **caractérisée en ce que** l'espace (V) laissé vacant entre les deux substrats (14, 16) est garni avec un matériau (M) solide.

11. Cellule d'affichage électro-optique selon la revendication 10, **caractérisée en ce que** le matériau (M) est un matériau polymérisé.

12. Cellule d'affichage électro-optique selon l'une quelconque des revendications 8 à 11, **caractérisée en ce que** le matériau de remplissage (M, M') présente sensiblement les mêmes propriétés optiques que le liquide optiquement actif (LC) lorsqu'il se trouve dans l'un de ses états stables.

13. Cellule d'affichage électro-optique selon l'une quelconque des revendications 1 à 12, **caractérisée en ce qu'**elle comprend au moins deux canaux de remplissage distincts remplis chacun d'un liquide aux propriétés électro-optiques différentes.

14. Procédé de fabrication d'une cellule d'affichage électro-optique selon l'une quelconque des revendications précédentes comprenant les étapes qui consistent à:
- se munir d'au moins un substrat avant (14) et d'au moins un substrat arrière (16);
- structurer sur les faces en regard des substrats avant (14) et arrière (16) au moins une électrode (A, B, C, D, E, F, G; n) et une contre-électrode (H, l, J; N) correspondantes,
ce procédé étant **caractérisé en ce qu'**il comprend en outre les étapes consistant à structurer sur l'un des deux substrats avant (14) ou arrière (16) au moins un canal de remplissage (6) qui s'étend entre lesdits deux substrats (14, 16) et qui suit sensiblement le contour de la au moins une électrode de façon à confiner un liquide optiquement actif (LC) au voisinage de ladite électrode.

15. Procédé de fabrication selon la revendication 14, **caractérisé en ce que** le canal de remplissage (6) comprend deux parois latérales (8, 8') qui s'étendent parallèlement à et à distance l'une de l'autre, ces parois (8, 8') étant réalisées par sérigraphie ou par photolithographie.

16. Procédé de fabrication selon l'une quelconque des revendications 14 ou 15, **caractérisé en ce que** l'on introduit dans l'espace (V) laissé vacant entre les substrats (14, 16) et les parois (8, 8') du canal de remplissage (6) un matériau (M) susceptible de s'écouler dans cet espace (V) et qui est durci ultérieurement.

17. Procédé de fabrication selon l'une quelconque des revendications 14 ou 15, **caractérisé en ce qu'**il comprend en outre l'étape consistant à réaliser un cadre de scellement (26) qui s'étend sensiblement sur le pourtour extérieur de la cellule et qui définit un volume (V') pour le confinement d'un matériau de remplissage (M') liquide.

18. Procédé de fabrication selon la revendication 17, **caractérisé en ce qu'**il consiste à solidifier le matériau de remplissage (M').

19. Procédé de fabrication selon l'une quelconque des revendications 14 ou 15, **caractérisé en ce que** l'on dépose sur l'un des substrats une couche de matériau solide (M") dans laquelle on structure le canal de remplissage.

20. Procédé de fabrication selon la revendication 19, **caractérisé en ce que** la couche de matériau (M") est déposée et structurée par sérigraphie ou par photolithographie.
